(19) Europäisches Patentamt
European Patent Office
Office européen des brevets

(11) EP 4 692 097 A1

(12) EUROPEAN PATENT APPLICATION
published in accordance with Art. 153(4) EPC

(43) Date of publication:
**11.02.2026 Bulletin 2026/07**

(21) Application number: **25776441.5**

(22) Date of filing: **17.02.2025**

(51) International Patent Classification (IPC):
***C07F 7/18*** *(2006.01)* ***C08C 19/25*** *(2006.01)*
***C08C 19/22*** *(2006.01)*

(52) Cooperative Patent Classification (CPC):
**C07F 7/18; C08C 19/22; C08C 19/25**

(86) International application number:
**PCT/KR2025/002283**

(87) International publication number:
**WO 2025/206586 (02.10.2025 Gazette 2025/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.03.2024 KR 20240040832**

(71) Applicant: **LG Chem, Ltd.**
**Seoul 07336 (KR)**

(72) Inventors:
- **JANG, Jae Kwon**
  **Daejeon 34122 (KR)**
- **KIM, Yong Jae**
  **Daejeon 34122 (KR)**
- **PARK, Do Young**
  **Daejeon 34122 (KR)**
- **LEE, Ju Yeol**
  **Daejeon 34122 (KR)**
- **LEE, Tae Hee**
  **Daejeon 34122 (KR)**

(74) Representative: **Vossius & Partner Patentanwälte Rechtsanwälte mbB**
**Siebertstraße 3**
**81675 München (DE)**

# (54) NOVEL COMPOUND AND METHOD FOR PREPARING SAME

(57) The present invention provides a novel compound which is a modifier material useful for modifying rubber, specifically, a polymer including a repeating unit derived from a conjugated diene-based monomer, and a method for preparing the same.

EP 4 692 097 A1

## Description

### TECHNICAL FIELD

[Cross-reference to Related Application]

The present application claims the benefit of priority based on Korean Patent Application No. 10-2024-0040832, filed on March 26, 2024, the entire contents disclosed in the Korean Patent Application are incorporated herein as a part of the specification.

[Technical Field]

The present invention relates to a novel compound that is capable of modifying rubber and a method for preparing the same.

### BACKGROUND ART

Recently, in response to the demand for low fuel consumption in automobiles, conjugated diene-based polymers that have low running resistance, excellent abrasion resistance and tensile properties, and also have steering stability represented by wet skid resistance are required as rubber materials for tires.

In order to reduce the running resistance of tires, there is a method to reduce the hysteresis loss of vulcanized rubber, and the evaluation indexes of the vulcanized rubber such as rebound elasticity, tan δ, and Goodrich heat generation at 50°C to 80°C, are used. That is, a rubber material that has high rebound elasticity or low tan δ and Goodrich heat generation at the temperature is desirable.

Natural rubber, polyisoprene rubber, or polybutadiene rubber are known as rubber materials with low hysteresis loss, but they have the problem of low wet skid resistance. Recently, conjugated diene-based polymers or copolymers such as styrene-butadiene rubber (hereinafter referred to as SBR) or butadiene rubber (hereinafter referred to as BR) are prepared by emulsion polymerization or solution polymerization and used as rubber for tires. Among them, the greatest advantage of solution polymerization over emulsion polymerization is that the vinyl structure content and styrene content that determine the rubber properties may be arbitrarily controlled, and the molecular weight and physical properties may be controlled by coupling or modification. Therefore, the structure of finally prepared SBR or BR may be easily changed, and the movement of a chain terminal may be reduced by bonding or modification of the chain terminal, and the bonding strength with fillers such as silica or carbon black may be increased, so that SBR by solution polymerization is widely used as a rubber material for tires.

The solution polymerized SBR is prepared using an anionic polymerization initiator, and a technology is used to introduce a functional group to the terminal by bonding or modifying the chain terminal of the formed polymer using various modifiers.

[Prior Art Document]

[Patent Document]

(Patent Document 1) KR 1994-0021564 A (1994. 10.19)

### DISCLOSURE OF THE INVENTION

### TECHNICAL PROBLEM

The present invention is devised to solve the problems of the prior art, and aims to provide a novel compound useful as a rubber modifier that may increase the affinity between rubber and filler.

In addition, the present invention aims to provide a method for preparing the compound.

### TECHNICAL SOLUTION

According to an embodiment of the present invention to solve the above tasks, the present invention provides a novel compound and a method for preparing the same.

(1) The present invention provides a compound represented by Formula 1 below.

[Formula 1]

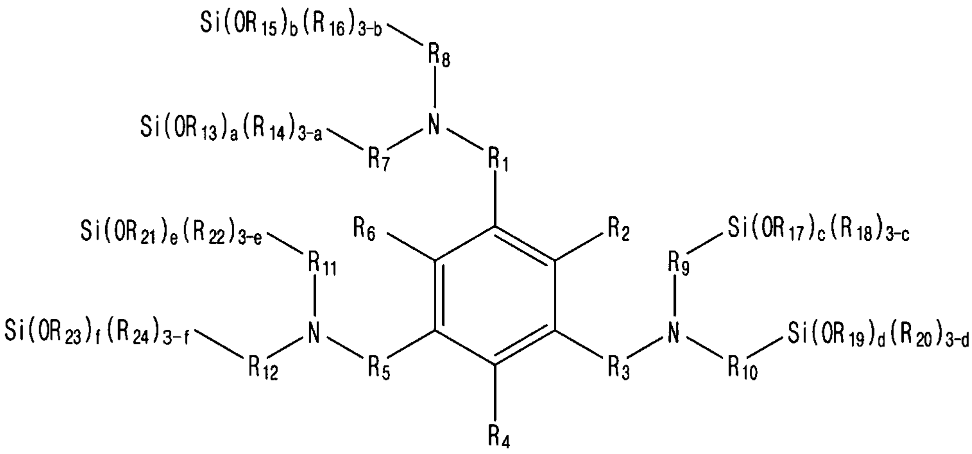

In Formula 1, $R_1$, $R_3$, $R_5$ and $R_7$ to $R_{12}$ are each independently an alkylene group of 1 to 20 carbon atoms, $R_2$, $R_4$ and $R_6$ are each independently a hydrogen atom or an alkyl group of 1 to 20 carbon atoms, $R_{13}$ to $R_{24}$ are each independently an alkyl group of 1 to 20 carbon atoms, and a, b, c, d, e and f are each independently an integer selected from 1 to 3.

(2) The present invention provides the compound according to (1) above, wherein, in Formula 1, $R_1$, $R_3$, $R_5$ and $R_7$ to $R_{12}$ are each independently an alkylene group of 1 to 10 carbon atoms, $R_2$, $R_4$ and $R_6$ are each independently a hydrogen atom or an alkyl group of 1 to 10 carbon atoms, $R_{13}$ to $R_{24}$ are each independently an alkyl group of 1 to 10 carbon atoms, and a, b, c, d, e and f are each independently an integer selected from 1 to 3.

(3) The present invention provides the compound according to (1) or (2) above, wherein, in Formula 1, $R_1$, $R_3$, $R_5$ and $R_7$ to $R_{12}$ are each independently an alkylene group of 1 to 6 carbon atoms, $R_2$, $R_4$ and $R_6$ are each independently a hydrogen atom or an alkyl group of 1 to 6 carbon atoms, $R_{13}$ to $R_{24}$ are each independently an alkyl group of 1 to 6 carbon atoms, and a, b, c, d, e and f are each independently an integer selected from 1 to 3.

(4) The present invention provides the compound according to any one among (1) to (3) above, wherein the compound represented by Formula 1 is any one selected from the compounds represented by Formula 1-1 to Formula 1-3 below.

[Formula 1-1]

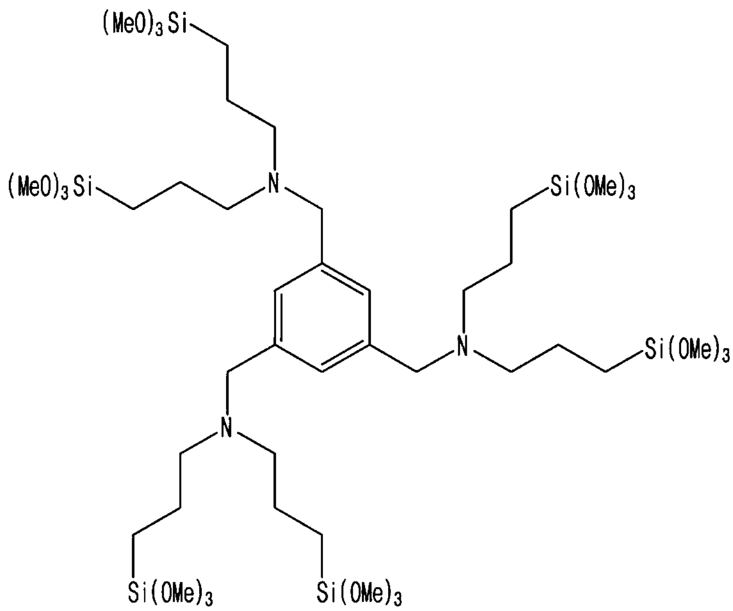

[Formula 1-2]

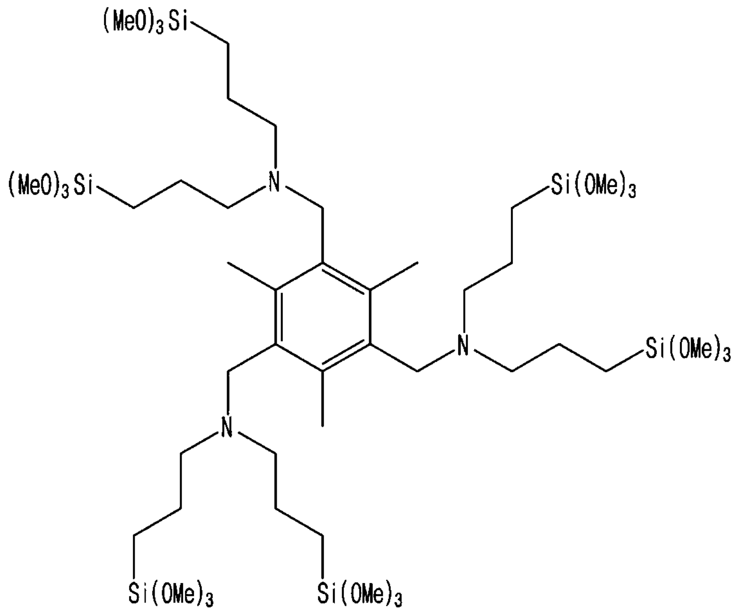

[Formula 1-3]

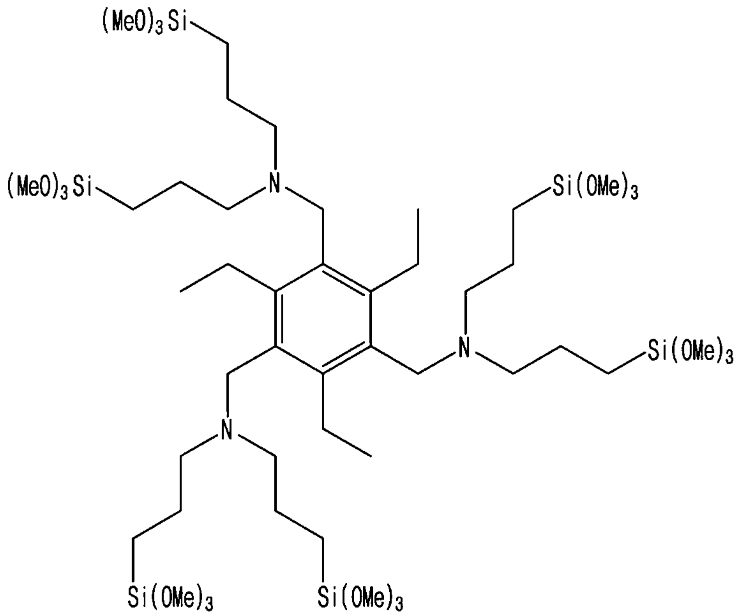

In Formula 1-1 to Formula 1-3, Me is a methyl group.

(5) The present invention provides the compound according to any one among (1) to (4) above, wherein the compound is a modifier modifying rubber.

(6) The present invention provides the compound according to any one among (1) to (5) above, wherein the compound is a modifier modifying a polymer comprising a repeating unit derived from a conjugated diene-based monomer.

(7) The present invention provides a method for preparing a compound represented by Formula 1 according to any one among (1) to (6), the method comprising a step of reacting a compound represented by Formula 2 and a compound represented by Formula 3 below.

[Formula 2]

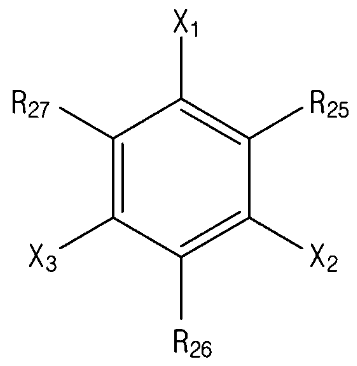

In Formula 2, $R_{25}$ to $R_{27}$ are each independently a hydrogen atom or an alkyl group of 1 to 20 carbon atoms, and $X_1$ to $X_3$ are each independently a halogen atom.

[Formula 3]

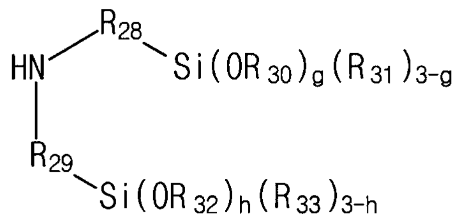

In Formula 3, $R_{28}$ and $R_{29}$ are alkylene groups of 1 to 20 carbon atoms, $R_{30}$ to $R_{38}$ are each independently an alkyl group of 1 to 20 carbon atoms, and g and h are each independently an integer of 1 to 3.

[Formula 1]

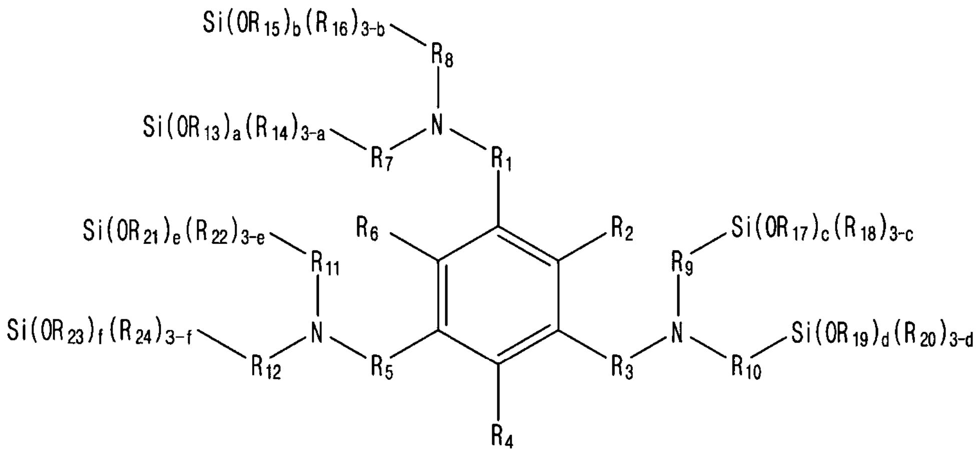

In Formula 1, $R_1$, $R_3$, $R_5$ and $R_7$ to $R_{12}$ are each independently an alkylene group of 1 to 20 carbon atoms, $R_2$, $R_4$ and $R_6$ are each independently a hydrogen atom or an alkyl group of 1 to 20 carbon atoms, $R_{13}$ to $R_{24}$ are each independently an alkyl group of 1 to 20 carbon atoms, and a, b, c, d, e and f are each independently an integer selected from 1 to 3.

(8) The present invention provides the method for preparing a compound according to (7) above, wherein, in Formula 1, $R_1$, $R_3$, $R_5$ and $R_7$ to $R_{12}$ are each independently an alkylene group of 1 to 10 carbon atoms, $R_2$, $R_4$ and $R_6$ are each independently a hydrogen atom or an alkyl group of 1 to 10 carbon atoms, $R_{13}$ to $R_{24}$ are each independently an alkyl group of 1 to 10 carbon atoms, and a, b, c, d, e and f are each independently an integer selected from 1 to 3.

(9) The present invention provides the method for preparing a compound according to (7) or (8) above, wherein, in Formula 2, $R_{25}$ to $R_{27}$ are each independently a hydrogen atom or an alkyl group of 1 to 10 carbon atoms, and $X_1$ to $X_3$ are each independently a halogen atom.

(10) The present invention provides the method for preparing a compound according to any one among (7) to (9) above, wherein, in Formula 3, $R_{28}$ and $R_{29}$ are alkylene groups of 1 to 10 carbon atoms, $R_{30}$ to $R_{33}$ are each independently an alkyl group of 1 to 10 carbon atoms, and g and h are each independently an integer of 1 to 3.

(11) The present invention provides the method for preparing a compound according to any one among (7) to (10) above, wherein the reaction is performed at a temperature of 25°C to 200°C in a reaction solvent under basic conditions.

(12) The present invention provides the method for preparing a compound according to any one among (7) to (11) above, wherein the compound represented by Formula 2 and the compound represented by Formula 3 are reacted in a molar ratio of 1:3 to 1:10.

## ADVANTAGEOUS EFFECTS

The compound according to the present invention is applied to a modification reaction of rubber, specifically, a polymer containing a repeating unit derived from a conjugated diene-based monomer, and has the effect of modifying the polymer at a high modification rate to maximize affinity with a filler.

## BEST MODE FOR CARRYING OUT THE INVENTION

Hereinafter, the present invention will be described in more detail to assist the understanding of the present invention.

Words or terms used in the description and claims of the present invention shall not be interpreted as the meaning defined in commonly used dictionaries. The words or terms should be interpreted as having a meaning that is consistent with their meaning in the technical idea of the invention, based on the principle that an inventor may properly define the meaning of the words to best explain the invention.

### Definition of Terms

In this specification, the term "polymer" refers to a polymer compound prepared by polymerizing monomers, whether of the same or different kinds. Thus, the general term polymer encompasses the term "homopolymer," which is usually used to refer to a polymer prepared from one kind of monomer, and the term "copolymer," as defined below.

In this specification, the term "copolymer," refers to a polymer prepared by polymerizing at least two different kinds of monomers. Thus, the general term copolymer includes a binary copolymer, which is usually used to refer to a polymer prepared from two different kinds of monomers, and a polymer prepared from two or more different kinds of monomers.

In this specification, the term "1,2-vinyl bond content" refers to the mass (or weight) percentage of butadiene contained in the 1,2-position within the polymer chain of a polymer based on a derived part from a conjugated diene-based monomer (such as butadiene) in the polymer (total amount of polymerized butadiene).

In this specification, the term "styrene bond content" refers to the mass (or weight) percentage of styrene contained in the polymer chain of a polymer derived from an aromatic vinyl monomer (such as styrene).

In this specification, the term "room temperature" refers to the temperature in its natural state without heating or cooling, which is a temperature of 20±5°C.

In this specification, the term "substitution" may mean that a hydrogen atom of a functional group, atomic group, or compound is substituted with a specific substituent, and if the hydrogen atom of the functional group, atomic group, or compound is substituted with a specific substituent, one or more substituents may exist depending on the number of hydrogen atoms present in the functional group, atomic group, or compound, and if multiple substituents exist, each substituent may be the same or different from each other.

In this specification, the term "alkyl group" may mean a monovalent aliphatic saturated hydrocarbon, and may include linear alkyl groups such as methyl, ethyl, propyl, and butyl; branched alkyl groups such as isopropyl, sec-butyl, tert-butyl, and neo-pentyl; and cyclic saturated hydrocarbons or cyclic unsaturated hydrocarbons containing one or more unsaturated bonds.

In this specification, the term "alkylene group" may mean a divalent aliphatic saturated hydrocarbon such as methylene, ethylene, propylene, and butylene.

In this specification, the terms "derived unit," "derived repeating unit," and "derived functional group" may mean a component, a structure, or the substance itself derived from a substance.

The terms "comprising," "having," and the derivatives herein are not intended to exclude the presence of any additional component, step, or procedure, whether or not specifically disclosed. In order to avoid any doubt, all

compositions claimed through use of the term "comprising" may include any additional additive, adjuvant, or compound, whether polymeric or otherwise, unless stated to the contrary. In contrast, the term "consisting essentially of" excludes from the scope of any subsequent description, any other component, step, or procedure, except that which is not essential to operability. The term "consisting of" excludes any component, step or procedure not specifically described or listed.

**Measurement Method and Conditions**

In this specification, "weight average molecular weight (Mw)" and "molecular weight distribution (MWD)" are measured by gel permeation chromatograph (GPC; PL GPC220, Agilent Technologies) under the conditions below, and a molecular weight distribution curve is obtained. The molecular weight distribution (PDI, MWD, Mw/Mn) is calculated from the measured molecular weights.

- Column: Two PLgel Olexis (Polymer Laboratories Co.) columns and one PLgel mixed-C (Polymer Laboratories Co.) column are combined and used
- Solvent: 2 wt% amine compound mixed in tetrahydrofuran
- Flow rate: 1 ml/min
- Sample concentration: 1-2 mg/ml (diluted in THF)
- Injection amount: 100 μl
- Column temperature: 40°C
- Detector: Refractive index
- Standard: Polystyrene (corrected by 3rd order function)

**Novel Compound**

The present invention provides a novel modifier compound that may provide a modified polymer with a high modification ratio and high affinity for a filler, by modifying rubber, specifically, a polymer including a repeating unit derived from a conjugated diene-based monomer.

The novel modifier compound according to an embodiment of the present invention is characterized by being represented by Formula 1 below.

[Formula 1]

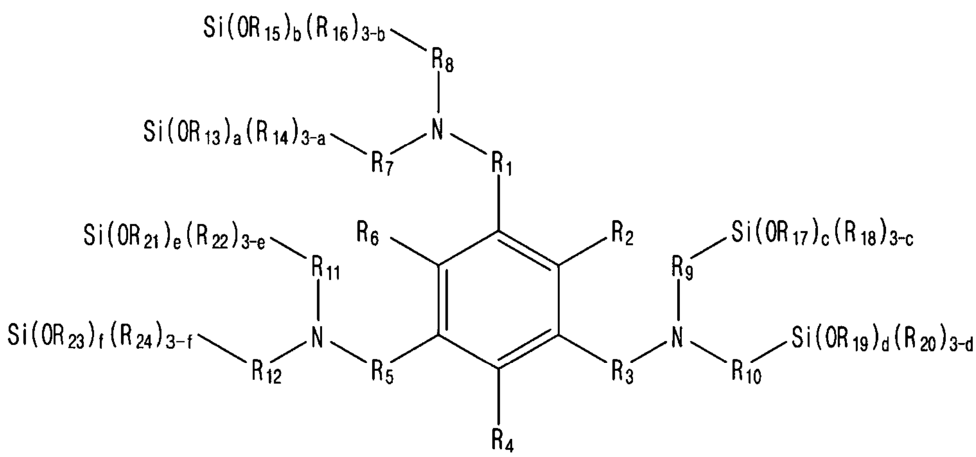

In Formula 1,
$R_1$, $R_3$, $R_5$ and $R_7$ to $R_{12}$ are each independently an alkylene group of 1 to 20 carbon atoms, $R_2$, $R_4$ and $R_6$ are each independently a hydrogen atom and an alkyl group of 1 to 20 carbon atoms, $R_{13}$ to $R_{24}$ are each independently an alkyl group of 1 to 20 carbon atoms, and a, b, c, d, e and f are each independently an integer selected from 1 to 3.

Specifically, in Formula 1, $R_1$, $R_3$, $R_5$ and $R_7$ to $R_{12}$ are each independently an alkylene group of 1 to 10 carbon atoms, $R_2$, $R_4$ and $R_6$ are each independently a hydrogen atom and an alkyl group of 1 to 10 carbon atoms, $R_{13}$ to $R_{24}$ are each independently an alkyl group of 1 to 10 carbon atoms, and a, b, c, d, e and f are each independently an integer selected from 1 to 3.

More specifically, in Formula 1, $R_1$, $R_3$, $R_5$ and $R_7$ to $R_{12}$ are each independently an alkylene group of 1 to 6 carbon atoms, $R_2$, $R_4$ and $R_6$ are each independently a hydrogen atom and an alkyl group of 1 to 6 carbon atoms, $R_{13}$ to $R_{24}$ are

each independently an alkyl group of 1 to 6 carbon atoms, and a, b, c, d, e and f are each independently an integer selected from 1 to 3.

More specifically, the compound represented by Formula 1 may be any one selected from the compounds represented by Formula 1-1 to Formula 1-3 below.

[Formula 1-1]

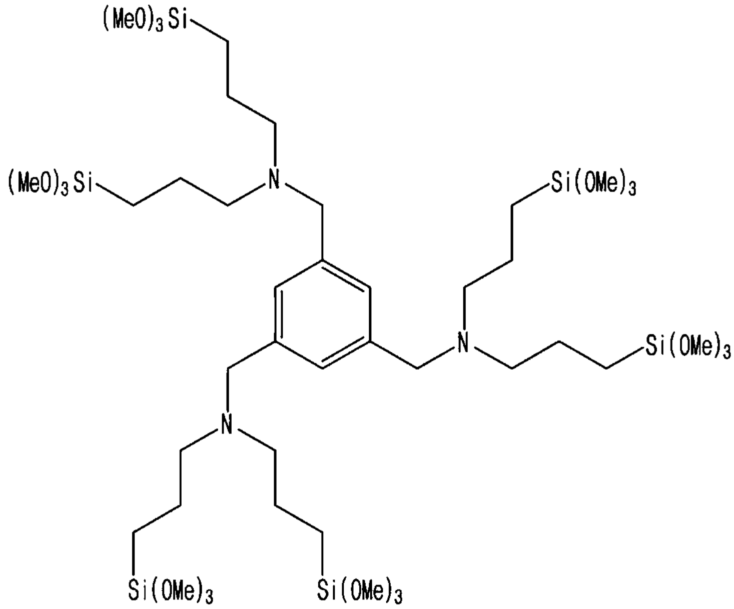

[Formula 1-2]

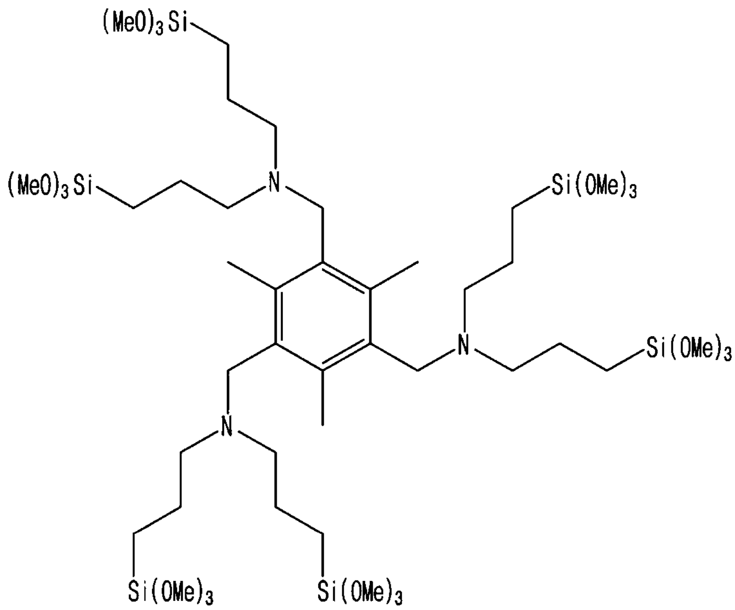

[Formula 1-3]

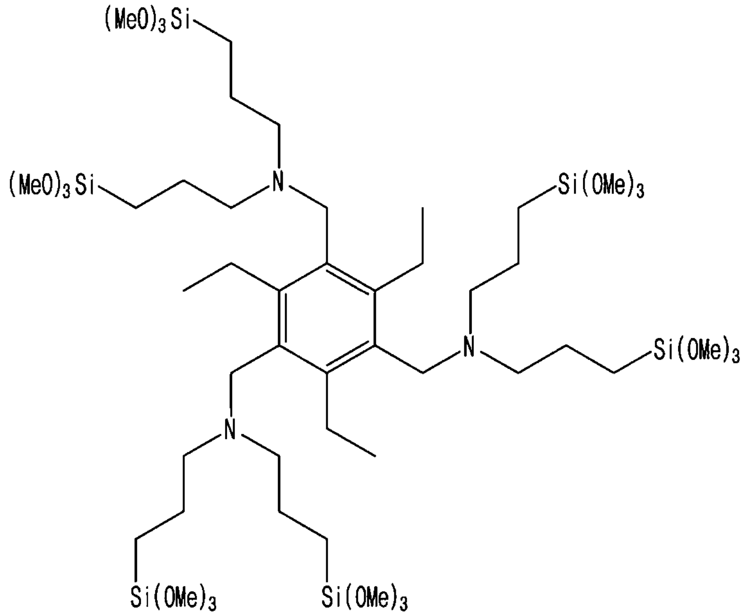

In Formula 1-1 to Formula 1-3, Me is a methyl group.

In addition, the compound represented by Formula 1 may be a modifier modifying rubber, specifically, a modifier modifying a polymer containing a repeating unit derived from a conjugated diene-based monomer, where the polymer may be a homopolymer containing a repeating unit derived from a conjugated diene-based monomer and a copolymer containing a repeating unit derived from the conjugated diene-based monomer and a repeating unit derived from a different monomer.

Meanwhile, the compound represented by Formula 1 according to the present invention may be applied as a modifier for a rubber modification reaction, that is, for modifying rubber, by providing a number of coupling sites to increase the coupling ratio between chains constituting the rubber, while at the same time being introduced into the chain to modify the chain structure, thereby highly modifying the rubber, and thus greatly increasing the affinity with the filler compared to the conventional modifier.

In addition, nitrogen in the compound represented by Formula 1 may play a role in increasing the affinity between the rubber modified from the compound represented by Formula 1 and the filler, and the compound represented by Formula 1 includes a number of coupling sites, so that the residual coupling sites (-Si-OR, alkoxy group) that do not react with the chain constituting the rubber after the rubber modification may form a number of covalent bonds with the filler, thereby forming strong bonds.

## Method for Preparing Compound

The present invention provides a method for preparing the novel compound represented by Formula 1.

The method for preparing the compound according to an embodiment of the present invention is characterized in comprising a step of reacting a compound represented by Formula 2 and a compound represented by Formula 3 below.

[Formula 2]

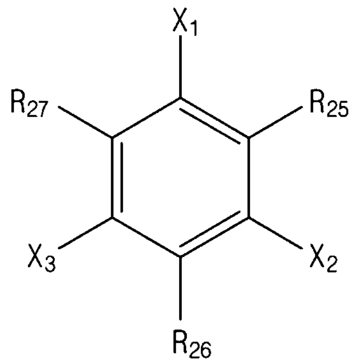

In Formula 2,
$R_{25}$ to $R_{27}$ are each independently a hydrogen atom or an alkyl group of 1 to 20 carbon atoms, and $X_1$ to $X_3$ are each independently a halogen atom,

[Formula 3]

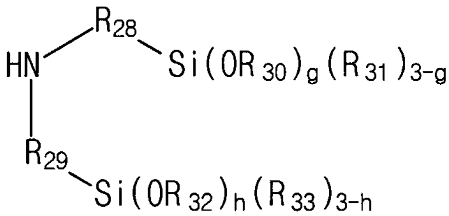

in Formula 3,
$R_{28}$ and $R_{29}$ are alkylene groups of 1 to 20 carbon atoms, $R_{30}$ to $R_{38}$ are each independently an alkyl group of 1 to 20 carbon atoms, and g and h are each independently an integer of 1 to 3,

[Formula 1]

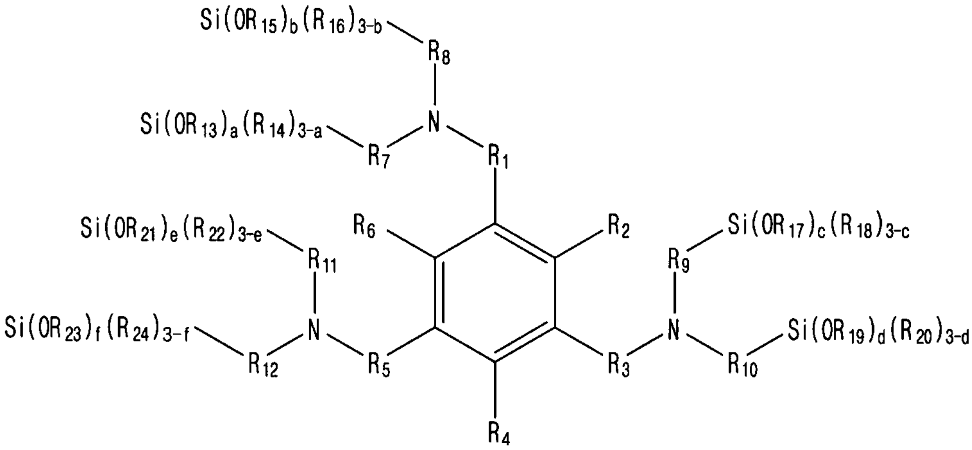

in Formula 1,

$R_1$, $R_3$, $R_5$ and $R_7$ to $R_{12}$ are each independently an alkylene group of 1 to 20 carbon atoms, $R_2$, $R_4$ and $R_6$ are each independently a hydrogen atom and an alkyl group of 1 to 20 carbon atoms, $R_{13}$ to $R_{24}$ are each independently an alkyl group of 1 to 20 carbon atoms, and
a, b, c, d, e and f are each independently an integer selected from 1 to 3.

In Formula 2, the halogen element may be Cl, Br, I or F.
The reaction may be performed at a temperature of 25°C to 200°C in a reaction solvent under basic conditions, and in this case, a reaction conversion ratio may be further excellent and may be advantageous for yield improvement.
In addition, the base condition may be formed by adding a basic compound, and the basic compound is not particularly limited and may be used if it is commonly used for the same purpose in the art, for example, one or more selected from triethylamine, potassium carbonate, potassium hydroxide, and sodium hydroxide may be used.
In addition, the compound represented by Formula 2 and the compound represented by Formula 3 may be reacted at an appropriate ratio according to the stoichiometric ratio, but specifically, may be reacted at a molar ratio of 1:3 to 1:10. In this case, the unreacted compound may be small or may be easily removed.
In addition, in Formula 2, $R_{25}$ to $R_{27}$ may be each independently a hydrogen atom or an alkyl group of 1 to 10 carbon atoms, and $X_1$ to $X_3$ may be each independently a halogen atom.
Specifically, in Formula 2, $R_{25}$ to $R_{27}$ may be each independently a hydrogen atom or an alkyl group of 1 to 6 carbon atoms, and $X_1$ to $X_3$ may be Br.
In addition, in Formula 3, $R_{28}$ and $R_{29}$ may be alkylene groups of 1 to 10 carbon atoms, $R_{30}$ to $R_{33}$ may be each independently an alkyl group of 1 to 10 carbon atoms, and g and h may be each independently an integer of 1 to 3.

Particularly, in Formula 3, $R_{28}$ and $R_{29}$ may be alkylene groups of 1 to 6 carbon atoms, $R_{30}$ to $R_{33}$ may be each independently an alkyl group of 1 to 6 carbon atoms, and g and h may be each independently an integer of 1 to 3.

In the compound represented by Formula 1 prepared above, specifically in Formula 1, $R_1$, $R_3$, $R_5$ and $R_7$ to $R_{12}$ may be each independently an alkylene group of 1 to 10 carbon atoms, $R_2$, $R_4$ and $R_6$ may be each independently a hydrogen atom and an alkyl group of 1 to 10 carbon atoms, $R_{13}$ to $R_{24}$ may be each independently an alkyl group of 1 to 10 carbon atoms, and a, b, c, d, e and f may be each independently an integer selected from 1 to 3.

In addition, in Formula 1, $R_1$, $R_3$, $R_5$ and $R_7$ to $R_{12}$ are each independently an alkylene group of 1 to 6 carbon atoms, $R_2$, $R_4$ and $R_6$ are each independently a hydrogen atom and an alkyl group of 1 to 6 carbon atoms, $R_{13}$ to $R_{24}$ are each independently an alkyl group of 1 to 6 carbon atoms, and a, b, c, d, e and f are each independently an integer selected from 1 to 3.

## Modified Conjugated Diene-based Polymer

The present invention provides a modified conjugated diene-based polymer modified with the compound represented by Formula 1.

The modified conjugated diene-based polymer according to an embodiment of the present invention is characterized in including a unit derived from a conjugated diene-based monomer and a modifier residue, and the modifier includes the compound represented by Formula 1.

Here, since the compound represented by Formula 1 is the same as described above, specific description thereof will be omitted.

The modified conjugated diene-based polymer has a repeating unit derived from a conjugated diene-based monomer as a main unit, and the conjugated diene-based monomer may be one or more selected from the group consisting of, for example, 1,3-butadiene, 2,3-dimethyl-1,3-butadiene, piperylene, 3-butyl-1,3-octadiene, isoprene, 2-phenyl-1,3-butadiene, and 2-halo-1,3-butadiene (halo means a halogen atom).

In addition, the modified conjugated diene-based polymer may additionally include an aromatic vinyl-based monomer and further include a repeating unit derived therefrom in addition to the conjugated diene-based monomer. The aromatic vinyl-based monomer may be, for example, one or more selected from the group consisting of styrene, $\alpha$-methylstyrene, 3-methylstyrene, 4-methylstyrene, 4-propylstyrene, 1-vinylnaphthalene, 4-cyclohexylstyrene, 4-(p-methylphenyl)styrene, 1-vinyl-5-hexylnaphthalene, 3-(2-pyrrolidino ethyl)styrene, 4-(2-pyrrolidino ethyl)styrene, and 3-(2-pyrrolidino-1-methyl ethyl)-$\alpha$-methylstyrene.

In another embodiment, the modified conjugated diene-based polymer may be a copolymer further including a repeating unit derived from a diene-based monomer having 1 to 10 carbon atoms together with the repeating unit derived from the conjugated diene-based monomer. The repeating unit derived from the diene-based monomer may be a repeating unit derived from a diene-based monomer different from the conjugated diene-based monomer, and the diene-based monomer different from the conjugated diene-based monomer may be, for example, 1,2-butadiene. If the conjugated diene-based polymer is a copolymer further including a diene-based monomer, the conjugated diene-based polymer may include a repeating unit derived from the diene-based monomer in an amount of more than 0 wt% to 1 wt%, more than 0 wt% to 0.1 wt%, more than 0 wt% to 0.01 wt%, or more than 0 wt% to 0.001 wt%, and has an effect of preventing gel formation within this range.

According to an embodiment of the present invention, if two or more monomers are included in the chain of the conjugated diene-based polymer, a chain structure in an intermediate form of a random copolymer and a block copolymer may be included, and in this case, the control of a microstructure may be easy, and thus, there is an excellent effect of balance between each property. The random copolymer may mean that the repeating units forming the copolymer are arranged randomly.

In addition, the modified conjugated diene-based polymer includes a functional group derived from a modifier, and the modifier is for modifying the terminal of the polymer and means a unit derived from the compound represented by Formula 1.

According to an embodiment of the present invention, the modified conjugated diene-based polymer may have a weight average molecular weight (Mw) measured by gel permeation chromatography (GPC) of 300,000 g/mol to 3,000,000 g/mol, 400,000 g/mol to 2,500,000 g/mol, or 500,000 g/mol to 2,000,000 g/mol, and within this range, the running resistance and wet skid resistance have more balanced and excellent effect.

In addition, the modified conjugated diene-based polymer according to an embodiment of the present invention may be a high molecular weight polymer having a weight average molecular weight of 800,000 g/mol or more, preferably, 1,000,000 g/mol or more, and thus may achieve a polymer having excellent tensile properties, which may be achieved by achieving the effect of elongating the polymer chain together with the control of the microstructure when prepared according to the above-described preparation method.

The modified conjugated diene-based polymer according to an embodiment of the present invention, may have a number average molecular weight (Mn) of 1,000 g/mol to 2,000,000 g/mol, 10,000 g/mol to 1,500,000 g/mol, or 100,000

g/mol to 1,200,000 g/mol, and the number average molecular weight may be preferably 400,000 g/mol or more, more preferably 500,000 g/mol or more. In addition, the peak top molecular weight (Mp) may be 1,000 g/mol to 3,000,000 g/mol, 10,000 g/mol to 2,000,000 g/mol, or 100,000 g/mol to 2,000,000 g/mol. Within the ranges, there are excellent effects in running resistance and wet skid resistance.

In addition, the modified conjugated diene-based polymer may have molecular weight distribution of 1.0 to 3.0, preferably 1.0 to 2.5, more preferably 1.0 to 2.0.

In addition, the modified conjugated diene-based polymer according to an embodiment of the present invention is required to satisfy the Mooney viscosity measured under ASTM D1646 conditions of 40 to 120, preferably 45 to 100. There may be various criteria for evaluating processability, but if the Mooney viscosity satisfies the range, the processability may be considerably excellent.

In addition, the modified conjugated diene-based polymer may be prepared by a common method, except for modifying with the compound represented by Formula 1, for example, may be prepared by polymerizing a conjugated diene-based monomer or a conjugated diene-based monomer and an aromatic vinyl-based monomer in the presence of a hydrocarbon solvent and a polymerization initiator to prepare an active polymer, and reacting the active polymer with the compound represented by Formula 1.

The hydrocarbon solvent is not particularly limited, but may be one or more selected from the group consisting of n-pentane, n-hexane, n-heptane, isooctane, cyclohexane, toluene, benzene, and xylene.

The polymerization initiator may be used in an amount of 0.1 to 3.0 equivalents, preferably 0.1 to 2.0 equivalents, more preferably 0.5 to 1.5 equivalents, based on 1.0 equivalent of the monomer. In another embodiment, the polymerization initiator may be used in an amount of 0.01 mmol to 10 mmol, 0.05 mmol to 5 mmol, 0.1 mmol to 2 mmol, 0.1 mmol to 1 mmol, or 0.15 to 0.8 mmol, based on total 100 g of the monomer. Here, the total 100 g of the monomer may be a conjugated diene-based monomer, or may represent the total amount of the conjugated diene-based monomer and the aromatic vinyl-based monomer.

Meanwhile, the polymerization initiator may be an organometallic compound, and may be, for example, one or more selected from an organolithium compound, an organosodium compound, an organopotassium compound, an organorubidium compound, and an organocesium compound.

Specifically, the organometallic compound may be one or more selected from the group consisting of methyllithium, ethyllithium, propyllithium, n-butyllithium, s-butyllithium, t-butyllithium, hexyllithium, n-decyllithium, t-octyllithium, phenyllithium, 1-naphthyllithium, n-eicosyllithium, 4-butylphenyllithium, 4-tolyllithium, cyclohexyllithium, 3,5-di-n-heptylcyclohexyllithium, 4-cyclopentyllithium, naphthylsodium, naphthylpotassium, lithium alkoxide, sodium alkoxide, potassium alkoxide, lithium sulfonate, sodium sulfonate, potassium sulfonate, lithium amide, sodium amide, potassium amide, and lithium isopropylamide.

In addition, the polymerization may be performed by further using a polar additive, and in the case of homopolymerizing a conjugated diene-based monomer, the ratio of 1,2-bonds and 1,4-bonds may be controlled through reaction rate control, and in the case of copolymerizing a conjugated diene-based monomer and an aromatic vinyl-based monomer, the reaction rate difference between the monomers may be compensated, thereby inducing easy formation of a random copolymer.

The total amount of the polar additive used may be in a ratio of 0.001 g to 50 g, or 0.002 g to 1.0 g, based on 100 g of the total monomer. In another embodiment, the total amount of the polar additive used may be in a ratio of more than 0 g to 1 g, 0.01 g to 1 g, or 0.1 g to 0.9 g, based on total 100 g of the polymerization initiator.

The polar additive may be, for example, one or more selected from the group consisting of tetrahydrofuran, 2,2-di(2-tetrahydrofuryl)propane, diethyl ether, cyclopentyl ether, dipropyl ether, ethylene methyl ether, ethylene glycol dimethyl ether, diethylene glycol, dimethyl ether, tert-butoxyethoxyethane, bis(3-dimethylaminoethyl) ether, (dimethylaminoethyl)ethyl ether, trimethylamine, triethylamine, tripropylamine, N,N,N',N'-tetramethylethylenediamine, sodium mentholate, and 2-ethyl tetrahydrofurfuryl ether, preferably, 2,2-di(2-tetrahydrofuryl) propane, triethylamine, tetramethylethylenediamine, sodium mentholate, or 2-ethyl tetrahydrofurfuryl ether.

In addition, the active polymer may mean a polymer in which the anion of a polymer and the organometallic cation of a polymerization initiator are combined.

The reaction of the active polymer and the compound represented by Formula 1 may be a reaction between an anionic active moiety of the active polymer and an alkoxy group bonded to a silane of the compound represented by Formula 1. The compound represented by Formula 1 may be used in an amount of 0.01 mmol to 10 mmol based on total 100 g of the monomer. In another embodiment, the compound represented by Formula 1 may be used in a molar ratio of 1:0.1 to 10, 1:0.1 to 5, or 1:0.1 to 1:3 based on 1 mol of the polymerization initiator in step (S3).

In this case, the reaction may be a modification reaction in which the compound represented by Formula 1 is simply bonded to the active polymer, or a coupling reaction in which the active polymer is connected based on the compound represented by Formula 1.

## Examples

Hereinafter, the present invention will be explained in detail referring to examples. However, the examples according to the present invention may be modified in various different forms, and the scope of the present invention should not be construed as being limited to the examples described below. The examples of the present invention are provided to more completely explain the present invention to a person having average knowledge in the art.

## Example 1

3.5 g (9.81 mmol) of 1,3,5-tris(bromomethyl)benzene, 10.05 g of bis(3-(trimethoxysilyl)propyl)amine and 5.08 g of triethylamine were reacted at a temperature of 50°C while stirring overnight (12 hours). After completion of the reaction, the temperature was lowered to room temperature, and 50 ml of hexane was added thereto, followed by stirring for 15 minutes, and then, solid by-products were removed using a celite filter, and a solution and impurities were removed by distillation under reduced pressure to prepare a compound represented by Formula 1-1 as a light brown oil. The synthesized compound was confirmed through $^1H$ NMR analysis.

[Formula 1-1]

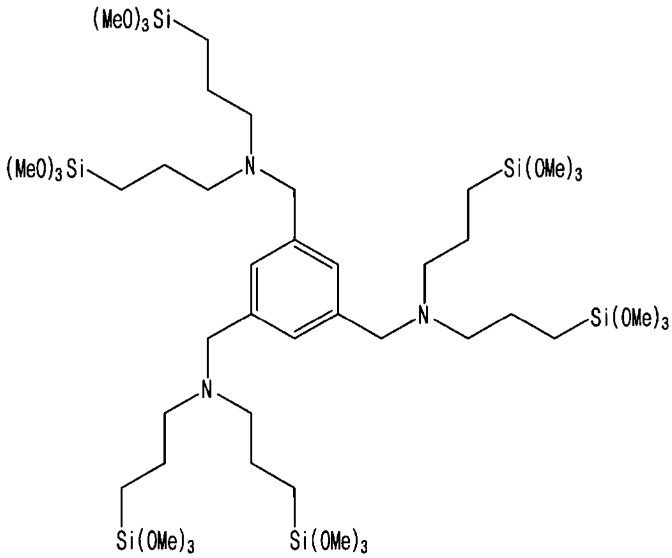

In Formula 1-1, Me is a methyl group.

$^1H$ NMR (500 MHz, $CDCl_3$) $\delta$ 7.10 (s, 3H), 3.60-3.50 (m, 60H), 2.46-2.34 (m, 12H), 1.64-1.48 (m, 12H), 0.36-0.52 (m, 12H).

## Example 2

3.5 g (8.77 mmol) of 1,3,5-tris(bromomethyl)-2,4,6-trimethylbenzene, 8.99 g of bis(3-(trimethoxysilyl)propyl) amine and 4.55 g of triethylamine were reacted at a temperature of 50°C while stirring overnight (12 hours). After completion of the reaction, the temperature was lowered to room temperature, and 50 ml of hexane was added thereto, followed by stirring for 15 minutes, and then, solid by-products were removed using a celite filter, and a solution and impurities were removed by distillation under reduced pressure to prepare a compound represented by Formula 1-2 as a light brown oil. The synthesized compound was confirmed through $^1H$ NMR analysis.

[Formula 1-2]

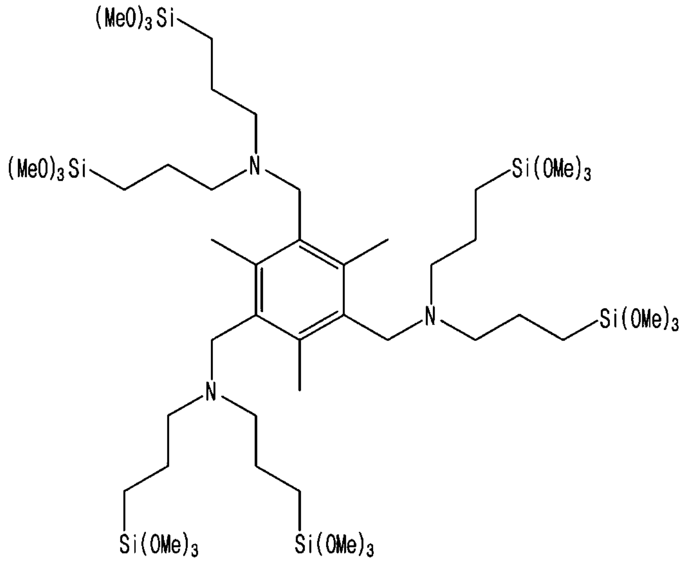

In Formula 1-2, Me is a methyl group.

$^1H$ NMR (500 MHz, $CDCl_3$) δ 3.53 (s, 60H), 2.37 (dd, J=17.7, 10.7 Hz, 21H), 1.58-1.46 (m, 12H), 0.58-0.47 (m, 12H).

**Example 3**

3.5 g (7.94 mmol) of 1,3,5-tris(bromomethyl)-2,4,6-trimethylbenzene, 8.13 g of bis(3-(trimethoxysilyl)propyl) amine and 4.11 g of triethylamine were reacted at a temperature of 50°C while stirring overnight (12 hours). After completion of the reaction, the temperature was lowered to room temperature, and 50 ml of hexane was added thereto, followed by stirring for 15 minutes, and then, solid by-products were removed using a celite filter and a solution and impurities were removed by distillation under reduced pressure to prepare a compound represented by Formula 1-3 as a light brown oil. The synthesized compound was confirmed through $^1H$ NMR analysis.

[Formula 1-3]

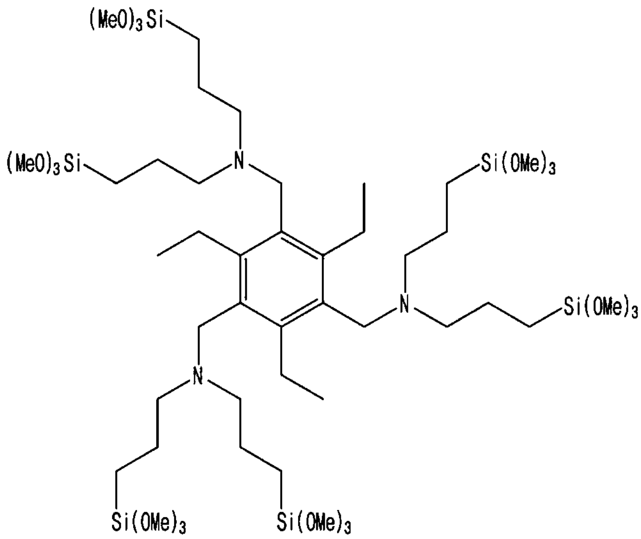

In Formula 1-3, Me is a methyl group.

$^1H$ NMR (500 MHz, $CDCl_3$) δ 3.52 (d, J=3.0 Hz, 60H), 3.02 (dd, J=14.3, 6.9 Hz, 6H), 2.34 (dd, J=15.5, 8.6 Hz, 12H), 1.56-1.46 (m, 12H), 1.13-1.03 (m, 9H), 0.51-0.46 (m, 12H).

**Example 4**

In a 10 L autoclave reactor, 64.5 g of styrene, 235.5 g of 1,3-butadiene, 2,000 g of n-hexane, and 0.42 g of 2,2-di(2-(tetrahydrofuryl)propane) (DTP) as a polar additive were put, and the internal temperature of the reactor was adjusted to 60°C. When reached 60°C, 0.26 g of n-butyllithium was added to the reactor and reacted. After 40 minutes, 0.44 g of the compound represented by Formula 1-1 prepared in Example 1 was added and reacted for 40 minutes. Then, the reaction was quenched using ethanol, an antioxidant was added to obtain a polymer, and the polymer was dried to prepare a modified styrene-butadiene copolymer.

**Example 5**

A modified styrene-butadiene copolymer was prepared in the same manner as in Example 4, except that the compound represented by Formula 1-2 prepared in Example 2 was used instead of the compound represented by Formula 1-1 in Example 4.

**Example 6**

A modified styrene-butadiene copolymer was prepared in the same manner as in Example 4, except that the compound represented by Formula 1-3 prepared in Example 3 was used instead of the compound represented by Formula 1-1 in Example 4.

**Comparative Example**

A modified styrene-butadiene copolymer was prepared in the same manner as in Example 4, except that 3-(trimethoxysilyl)propylamine (Sigma-Aldrich Co.) was used instead of the compound represented by Formula 1-1 in Example 4.

**Experimental Example 1. Evaluation of Polymer Properties**

For each modified styrene-butadiene copolymer prepared in the Examples and Comparative Example, the weight average molecular weight (Mw, x $10^3$ g/mol), maximum peak molecular weight (Mp, x $10^3$ g/mol), and coupling number were measured, respectively. The results are shown in Table 1 below.

1) Weight average molecular weight (Mw, x $10^3$ g/mol), and maximum peak molecular weight (Mp, x $10^3$ g/mol)

The weight average molecular weight (Mw) and maximum peak molecular weight (Mp) were measured, respectively, by gel permeation chromatography (GPC) (PL GPC220, Agilent Technologies) under the conditions below. Meanwhile, a portion of the active polymer was collected and the maximum peak molecular weight before modification was also measured.

- Column: Two PLgel Olexis (Polymer Laboratories Co.) columns and one PLgel mixed-C (Polymer Laboratories Co.) column were combined and used
- Solvent: 2 wt% amine compound mixed in tetrahydrofuran
- Flow rate: 1 mL/min
- Sample concentration: 1-2 mg/mL (diluted in THF)
- Injection volume: 100 uL
- Column temperature: 40°C
- Detector: Refractive index
- Standard: Polystyrene (corrected with a 3rd order function)

2) Coupling Number (C.N.)

The coupling number was calculated by Mathematical Equation 1 below from the maximum peak molecular weight before modification measured in 1) above and the maximum peak molecular weight of a final modified polymer.

[Mathematical Equation 1]

$$\text{Coupling number} = Mp_2/Mp_1$$

In Mathematical Equation 1 above, $Mp_1$ is the maximum peak molecular weight of the active polymer before modification, and $Mp_2$ is the maximum peak molecular weight of the final modified polymer.

[Table 1]

| | | Example | | | Comparative Example |
|---|---|---|---|---|---|
| | | 4 | 5 | 6 | |
| GPC | Mw (x $10^3$ g/mol) | 1032 | 1135 | 1167 | 498 |
| | $Mp_1$ (x $10^3$ g/mol) | 145 | 156 | 155 | 207 |
| | $Mp_2$ (x $10^3$ g/mol) | 886 | 970 | 994 | 477 |
| | Coupling number | 6.11 | 6.22 | 6.41 | 2.30 |

As shown in Table 1 above, it was confirmed that Examples 4 to 6 showed a significant increase in the weight average molecular weight and a significant increase in the coupling number compared to the Comparative Example. Through this, it was confirmed that the compound represented by Formula 1 according to the present invention is applied as a modifier for modifying a polymer, thereby providing a number of coupling sites to increase the coupling ratio between chains constituting the polymer, while at the same time being introduced into the chain to modify the chain structure, thereby highly modifying the polymer.

## Claims

1. A compound represented by the following Formula 1:

[Formula 1]

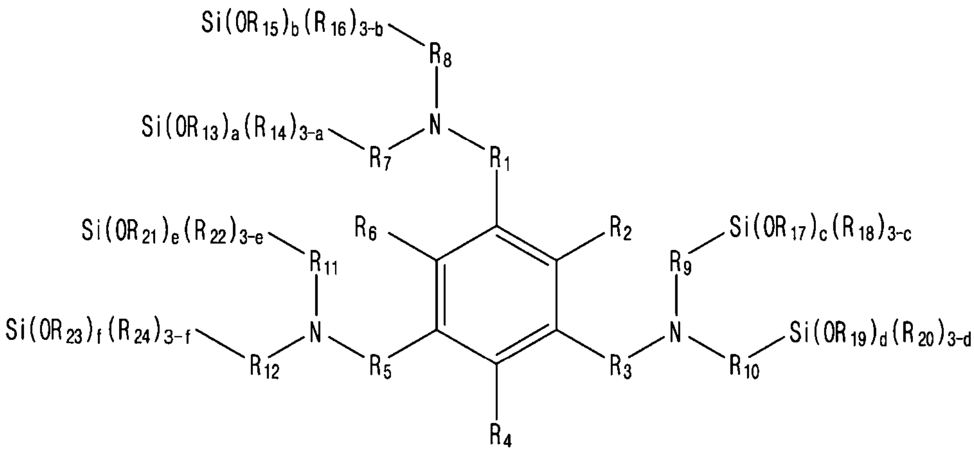

in Formula 1,

$R_1$, $R_3$, $R_5$ and $R_7$ to $R_{12}$ are each independently an alkylene group of 1 to 20 carbon atoms,
$R_2$, $R_4$ and $R_6$ are each independently a hydrogen atom or an alkyl group of 1 to 20 carbon atoms,
$R_{13}$ to $R_{24}$ are each independently an alkyl group of 1 to 20 carbon atoms, and
a, b, c, d, e and f are each independently an integer selected from 1 to 3.

2. The compound according to claim 1, wherein, in Formula 1, $R_1$, $R_3$, $R_5$ and $R_7$ to $R_{12}$ are each independently an alkylene group of 1 to 10 carbon atoms, $R_2$, $R_4$ and $R_6$ are each independently a hydrogen atom or an alkyl group of 1 to

10 carbon atoms, $R_{13}$ to $R_{24}$ are each independently an alkyl group of 1 to 10 carbon atoms, and a, b, c, d, e and f are each independently an integer selected from 1 to 3.

**3.** The compound according to claim 1, wherein, in Formula 1, $R_1$, $R_3$, $R_5$ and $R_7$ to $R_{12}$ are each independently an alkylene group of 1 to 6 carbon atoms, $R_2$, $R_4$ and $R_6$ are each independently a hydrogen atom or an alkyl group of 1 to 6 carbon atoms, $R_{13}$ to $R_{24}$ are each independently an alkyl group of 1 to 6 carbon atoms, and a, b, c, d, e and f are each independently an integer selected from 1 to 3.

**4.** The compound according to claim 1, wherein the compound represented by Formula 1 is any one selected from the compounds represented by the following Formula 1-1 to Formula 1-3:

[Formula 1-1]

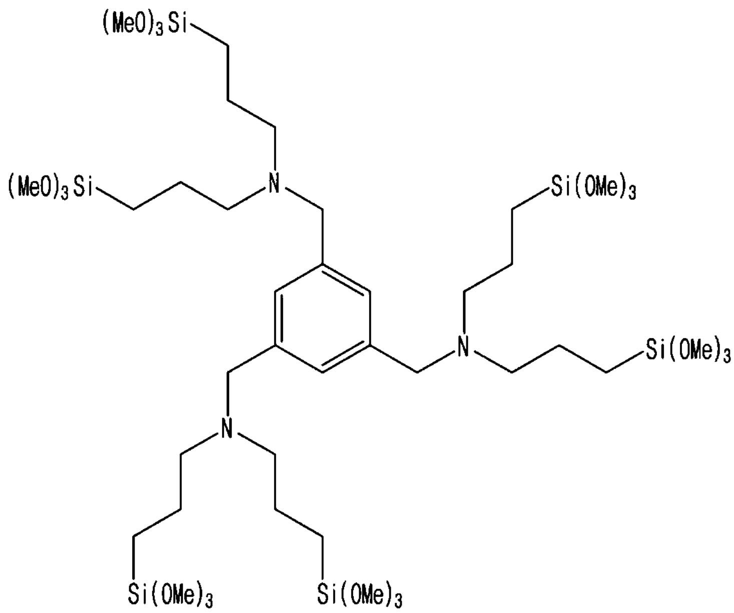

[Formula 1-2]

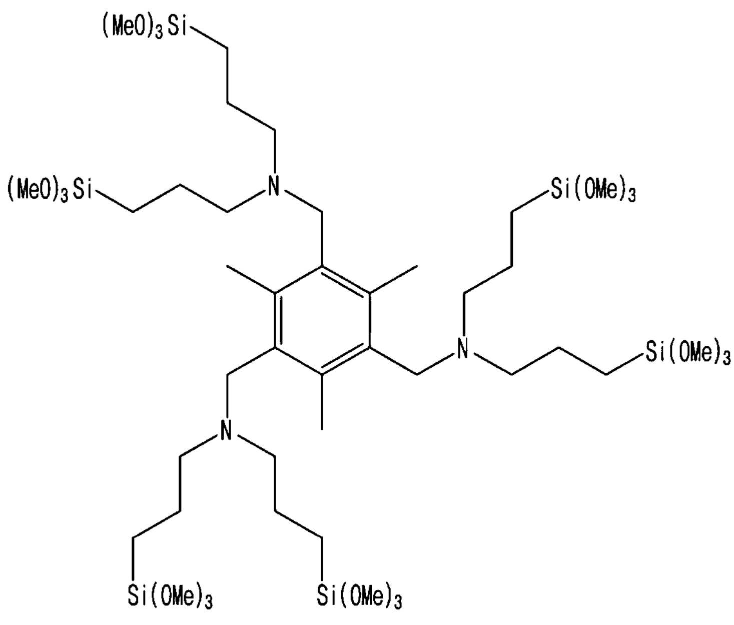

[Formula 1-3]

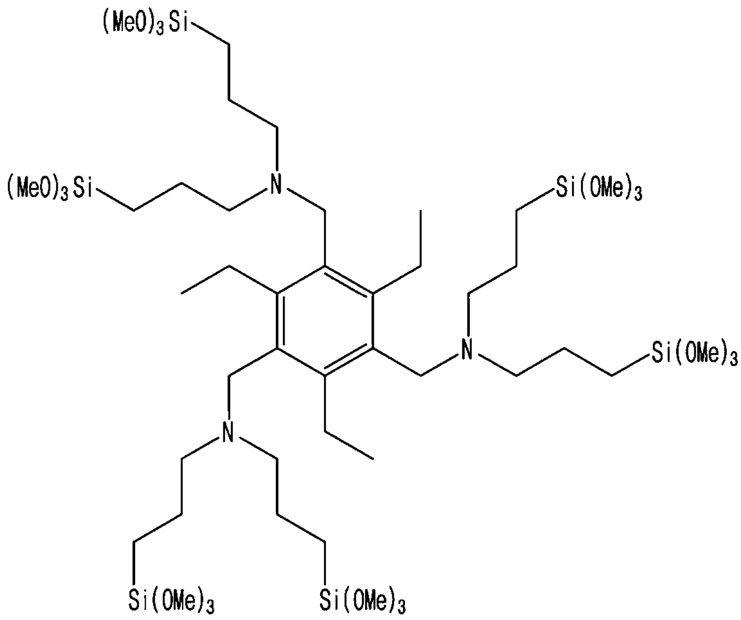

in Formula 1-1 to Formula 1-3, Me is a methyl group.

**5.** The compound according to claim 1, wherein the compound is a modifier modifying rubber.

**6.** The compound according to claim 1, wherein the compound is a modifier modifying a polymer comprising a repeating unit derived from a conjugated diene-based monomer.

**7.** A method for preparing a compound represented by the following Formula 1, the method comprising a step of reacting a compound represented by the following Formula 2 and a compound represented by the following Formula 3:

[Formula 2]

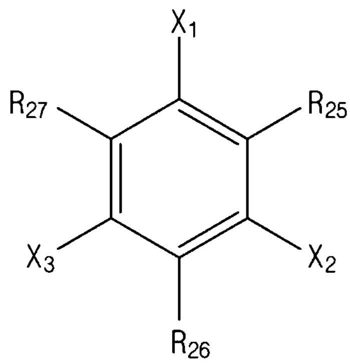

in Formula 2,

$R_{25}$ to $R_{27}$ are each independently a hydrogen atom or an alkyl group of 1 to 20 carbon atoms, and
$X_1$ to $X_3$ are each independently a halogen atom,

[Formula 3]

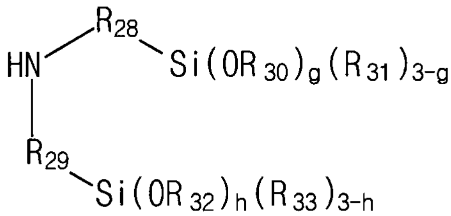

in Formula 3,

$R_{28}$ and $R_{29}$ are alkylene groups of 1 to 20 carbon atoms,
$R_{30}$ to $R_{38}$ are each independently an alkyl group of 1 to 20 carbon atoms, and
g and h are each independently an integer of 1 to 3,

[Formula 1]

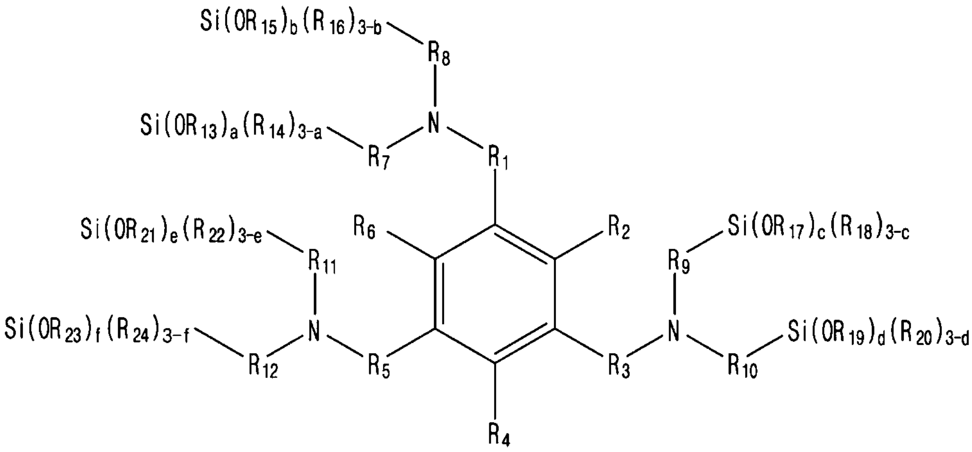

in Formula 1,

$R_1$, $R_3$, $R_5$ and $R_7$ to $R_{12}$ are each independently an alkylene group of 1 to 20 carbon atoms,
$R_2$, $R_4$ and $R_6$ are each independently a hydrogen atom or an alkyl group of 1 to 20 carbon atoms,
$R_{13}$ to $R_{24}$ are each independently an alkyl group of 1 to 20 carbon atoms, and
a, b, c, d, e and f are each independently an integer selected from 1 to 3.

**8.** The method for preparing a compound according to claim 7, wherein, in Formula 1, $R_1$, $R_3$, $R_5$ and $R_7$ to $R_{12}$ are each independently an alkylene group of 1 to 10 carbon atoms, $R_2$, $R_4$ and $R_6$ are each independently a hydrogen atom or an alkyl group of 1 to 10 carbon atoms, $R_{13}$ to $R_{24}$ are each independently an alkyl group of 1 to 10 carbon atoms, and a, b, c, d, e and f are each independently an integer selected from 1 to 3.

**9.** The method for preparing a compound according to claim 7, wherein, in Formula 2, $R_{25}$ to $R_{27}$ are each independently a hydrogen atom or an alkyl group of 1 to 10 carbon atoms, and $X_1$ to $X_3$ are each independently a halogen atom.

**10.** The method for preparing a compound according to claim 7, wherein, in Formula 3, $R_{28}$ and $R_{29}$ are alkylene groups of 1 to 10 carbon atoms, $R_{30}$ to $R_{33}$ are each independently an alkyl group of 1 to 10 carbon atoms, and g and h are each independently an integer of 1 to 3.

**11.** The method for preparing a compound according to claim 7, wherein the reaction is performed at temperature conditions of 25°C to 200°C in a reaction solvent under basic conditions.

**12.** The method for preparing a compound according to claim 7, wherein the compound represented by Formula 2 and the

compound represented by Formula 3 are reacted in a molar ratio of 1:3 to 1:10.

## INTERNATIONAL SEARCH REPORT

International application No.
**PCT/KR2025/002283**

### A. CLASSIFICATION OF SUBJECT MATTER

**C07F 7/18**(2006.01)i; **C08C 19/25**(2006.01)i; **C08C 19/22**(2006.01)i

According to International Patent Classification (IPC) or to both national classification and IPC

### B. FIELDS SEARCHED

Minimum documentation searched (classification system followed by classification symbols)

C07F 7/18(2006.01); B60C 1/00(2006.01); C07D 251/56(2006.01); C07F 7/08(2006.01); C08C 19/22(2006.01); C08C 19/25(2006.01); C08F 2/38(2006.01); C08F 236/10(2006.01); C08F 36/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 공액디엔계 단량체(conjugated diene-based monomer), 변성제(modifier), 아미노실란(aminosilane), 커플링(coupling), SBR(styrene-butadiene-rubber), 알콕시실란(alkoxysilane)

### C. DOCUMENTS CONSIDERED TO BE RELEVANT

| Category* | Citation of document, with indication, where appropriate, of the relevant passages | Relevant to claim No. |
|---|---|---|
| A | EP 3835325 A1 (ASAHI KASEI KABUSHIKI KAISHA) 16 June 2021 (2021-06-16) See claim 1; and paragraph [0135]. | 1-12 |
| A | KR 10-2019-0054257 A (LG CHEM, LTD.) 22 May 2019 (2019-05-22) See claims 1 and 3-5; and paragraphs [0067] and [0068]. | 1-12 |
| A | KR 10-2021-0109899 A (LG CHEM, LTD.) 07 September 2021 (2021-09-07) See claims 1-15. | 1-12 |
| A | KR 10-2017-0076570 A (LG CHEM, LTD.) 04 July 2017 (2017-07-04) See claims 1-18. | 1-12 |
| A | US 9062182 B2 (KOREA KUMHO PETROCHEMICAL CO., LTD.) 23 June 2015 (2015-06-23) See entire document. | 1-12 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 May 2025** | **22 May 2025** |

Name and mailing address of the ISA/KR

**Korean Intellectual Property Office**
**Government Complex-Daejeon Building 4, 189 Cheongsa-ro, Seo-gu, Daejeon 35208**

Facsimile No. **+82-42-481-8578**

Authorized officer

Telephone No.

**INTERNATIONAL SEARCH REPORT**
**Information on patent family members**

International application No.
**PCT/KR2025/002283**

| Patent document cited in search report | Publication date (day/month/year) | Patent family member(s) | Publication date (day/month/year) |
|---|---|---|---|
| EP 3835325 A1 | 16 June 2021 | CN 112979876 A | 18 June 2021 |
| | | CN 112979876 B | 08 September 2023 |
| | | EP 3835325 B1 | 12 June 2024 |
| | | EP 3845568 A2 | 07 July 2021 |
| | | EP 3845568 A3 | 27 October 2021 |
| | | HU E067763 T2 | 28 November 2024 |
| | | JP 2021-120448 A | 19 August 2021 |
| | | JP 2021-152135 A | 30 September 2021 |
| | | JP 2021-155701 A | 07 October 2021 |
| | | JP 2021-155702 A | 07 October 2021 |
| | | JP 7595446 B2 | 06 December 2024 |
| | | JP 7597484 B2 | 10 December 2024 |
| | | KR 10-2021-0075015 A | 22 June 2021 |
| | | KR 10-2517642 B1 | 06 April 2023 |
| | | SG 10202012412 A | 29 July 2021 |
| | | US 11884760 B2 | 30 January 2024 |
| | | US 2021-0189039 A1 | 24 June 2021 |
| KR 10-2019-0054257 A | 22 May 2019 | KR 10-2412603 B1 | 23 June 2022 |
| KR 10-2021-0109899 A | 07 September 2021 | None | |
| KR 10-2017-0076570 A | 04 July 2017 | CN 107849160 A | 27 March 2018 |
| | | CN 107849160 B | 12 May 2020 |
| | | EP 3296322 A1 | 21 March 2018 |
| | | EP 3296322 B1 | 10 April 2019 |
| | | JP 2018-531998 A | 01 November 2018 |
| | | JP 6616490 B2 | 04 December 2019 |
| | | KR 10-1923160 B1 | 29 November 2018 |
| | | US 10508157 B2 | 17 December 2019 |
| | | US 2018-0305470 A1 | 25 October 2018 |
| | | WO 2017-111463 A1 | 29 June 2017 |
| US 9062182 B2 | 23 June 2015 | KR 10-1365902 B1 | 12 March 2014 |
| | | US 2014-0200306 A1 | 17 July 2014 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020240040832
- KR 19940021564 A